(19) Europäisches Patentamt
European Patent Office
Office européen des brevets

(11) EP 2 053 808 B1

(12) **EUROPEAN PATENT SPECIFICATION**

(45) Date of publication and mention
of the grant of the patent:
**10.10.2012 Bulletin 2012/41**

(21) Application number: **07800928.9**

(22) Date of filing: **10.08.2007**

(51) Int Cl.:
***H04L 12/58*** *(2006.01)*

(86) International application number:
**PCT/CN2007/070452**

(87) International publication number:
**WO 2008/022586 (28.02.2008 Gazette 2008/09)**

(54) **The system, method and device for realizing email notification**

System, Verfahren und Einrichtung zur Realisierung einer E-mail-Benachrichtigung

Système, procédé et dispositif destinés à réaliser une notification de courriels

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **18.08.2006 CN 200610109849**

(43) Date of publication of application:
**29.04.2009 Bulletin 2009/18**

(73) Proprietor: **Huawei Technologies Co., Ltd.
Longgang District, Shenzhen
Guangdong 518129 (CN)**

(72) Inventors:
• **WANG, Lei
Shenzhen, Guangdong 518129 (CN)**
• **YANG, Jian
Shenzhen, Guangdong 518129 (CN)**
• **CHEN, Guoqiao
Shenzhen, Guangdong 518129 (CN)**

(74) Representative: **Kreuz, Georg Maria et al
Huawei Technologies Duesseldorf GmbH
Dessauerstrasse 3
80992 München (DE)**

(56) References cited:
WO-A-99/65256    WO-A-2005/006130
CN-A- 1 486 099    CN-A- 1 551 029
CN-A- 1 710 893    JP-A- 2006 113 956
US-B1- 6 745 193

**Description**

FIELD OF THE INVENTION

The present invention relates to communication field, more specifically, to system, method and apparatus for implementing email notification.

BACKGROUND

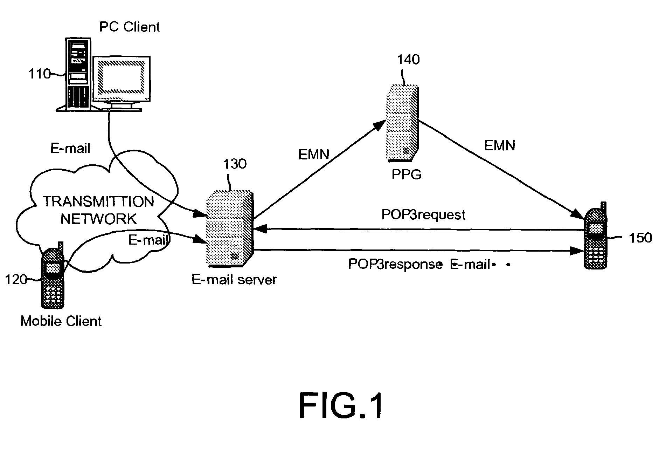

Currently, when an email server which provides service to a user equipment (UE) receives an email to be delivered to the UE, the e-mail server may inform the UE of the received new email. Figure 1 illustrates the principle of email notification. For ease of description, "electronic mail" will be abbreviated as "email" for short.

In Figure 1, an email sent from a PC client 110 or a mobile client 120, etc. may be received by an email server 130. The Email server 130 may generate an email notification (EMN) based on the received email and sends to a Push Proxy Gateway (PPG) 140. The PPG 140 may forward the EMN from the email server 130 to a UE 150. Generally, the EMN only includes a Universal Resource Identifier (URI) used to indicate the account of the email and a time stamp to which the email corresponds.

When receiving an EMN from the PPG 140, the UE 150 may request the email server 130 for the email to which the EMN corresponds by sending a Post Office Protocol 3 request (POP3 request) message. The email server 130 may deliver the email to the UE 150 by sending a POP3 response message which carries the email.

It can be seen from the above that the current EMN only includes two pieces of email information, i.e. URI and time stamp. Accordingly, the UE 150 may know that a certain email account receives a new email based solely on the received EMN. However, the UE 150 may neither be able to obtain the current email details with respect to this email account, nor be able to obtain the details of the specific email. This would cause the UE 150 unable to further operate the email flexibly based on the received EMN.

WO 99/65256 A (LOGICA INC) discloses a system for delivering electronic messaging to digital mobile phones. The system has a retrieval subsystem which retrieves a copy of electronic messages from a user's Inbox on an e-mail server; a message summarizing subsystem which extracts from said messages summarizing information and reformats said information in a manner for presentation to a user's digital phone; and a delivery subsystem which delivers the reformatted information as message summaries to a system that transmits said summaries to the user's digital phone.

SUMMARY

One embodiments of the present invention provides a system for implementing email notification. The system is able to inform the detailed email information so that the UE may flexibly perform subsequent email operations based on the EMN

One embodiments of the present invention provides an apparatus for implementing email notification. The apparatus is able to implement the notification of the detailed email information so that the UE may flexibly perform subsequent email operations based on the EMN.

The technical solutions according to the embodiments of the present invention are presented in the appended independent claims 1 and 7.

Compared with the prior art, the system, methods and apparatuses provided by the embodiments of the present invention ensure the EMN generation module to generate refined email information for the received email according to the configured refined email information format, and send the generated refined email information to the parsing module. Moreover, the parsing module in the UE may parse out the refined email information from the EMN generation module according to the configured refined email information format. Accordingly, the system, method and apparatus according to embodiments of the present invention all ensures the UE to be able to receive the refined email information to which the detailed email information of the UE email account corresponds. As such, the UE may be able to flexibly perform subsequent email operation according to the received refined email information.

BRIEF DESCRIPTION OF THE DRAWING(S)

Figure 1 is a prior art schematic of email notification; and

Figure 2 is a schematic of email notification according to a preferred embodiment of the present invention.

DETAILED DESCRIPTION

The purpose, technical solutions and advantages concerning the embodiments of the present invention will become more readily appreciated by reference to the following description of the embodiments, when taken in conjunction with the accompanying drawings.

A system for implementing email notification according to embodiments of the present invention includes an EMN generation module and a UE having a parsing module. The EMN generation module is configured to generate refined email information for the received email according to its configured refined email information format, and configured to deliver the generated refined email information to the parsing module. The parsing module parses out the refined email information generated by EMN according to its configured refined email information format.

A method for implementing email notification according to embodiments of the present invention includes generating refined email information for the received email to be sent to UE according to a pre-configured refined email information format, and delivering the generated refined email information to UE.

An email server for implementing email notification according to embodiments of the present invention includes an EMN generation module. The EMN generation module is configured to generate refined email information for the received email according to a configured refined email information format, and deliver the generated refined email information to the UE.

A UE for implementing email notification according to embodiments of the present invention includes a parsing module. The parsing module is configured to parse out the received refined email information according to a configured refined email information format.

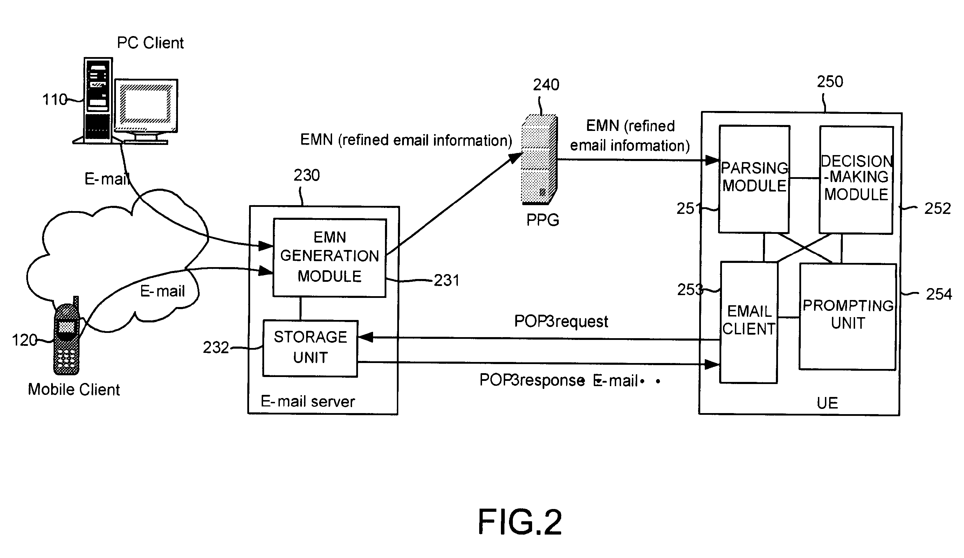

Figure 2 is a schematic of email notification according to a preferred embodiment of the present invention. In Figure 2, an EMN generation module 231 in an email server 230 has pre-configured a refined email information format which is used to describe refined email information. Moreover, the EMN generation module 231 receives emails sent from a PC client 110 or a mobile client 120, etc., through a transmission network. The transmission network may be the Internet and the like. The EMN generation module 231 may also be disposed in other physical entity.

When receiving an email, the EMN generation module 231 may generate an EMN including a URI and a time stamp for that email according to prior art technique, and may also generate refined email information according to pre-configured refined email information format by the same principle. The EMN may further incorporate the refined email information in the EMN and deliver the EMN to the PPG 240 together with the EMN. In addition, the EMN generation module 231 may also send the received email to a storage unit 232 for storage. The storage unit 232 may be located in the email server 230, and may also be located in a separate physical entity or may be located in other physical entity.

The EMN sent from the EMN generation module 231 to the PPG 240 is generally in text form. Usually, when the PPG 240 receives the EMN from EMN generation module 231, the EMN has to be converted to binary before delivering to the UE 250.

The parsing module 251 in the UE 250 has pre-configured a refined email information format which is the same as the refined email information format configured in the EMN generation module 231. The refined email information configured in the parsing module 251 may be different from the refined email information configured in the EMN generation module 231 in its expression. For instance, the refined email information configured in the parsing module 251 is expressed in a binary form while the refined email information configured in the EMN generation module 231 is expressed in a text form.

When receiving the EMN generated and sent by the EMN generation 231, the parsing module 251 parses out the refined email information represented by the refined email information format contained in the received EMN according to its configured refined email information format. The parsing module sends the parsed refined email information to connected prompting unit 254. The prompting unit 254 sends a prompt including the refined email information so as to inform the user who perceives the prompt of the refined email information in the email sent to the UE 250.

Specifically, the prompting unit 254 may be one or more types of user-oriented prompting devices such as a display, a speaker, etc. With respect to the display, the parsing module 251 may deliver the parsed refined email information to a connected display. The refined email information received by the display is displayed in a video manner which can be recognized by the user. With respect to the speaker, the parsing module 251 sends the parsed refined email information to a speaker which may play the received refined email information in an audio manner which can be recognized by the user.

If the received EMN includes a URI and a time stamp other than the refined email information, the parsing module 251 may also be able to parse out the URI and time stamp contained in the EMN using prior art, and may send the parsed URI and time stamp to the connected prompting unit 254. The prompting unit 254 may send a prompt including the URI and time stamp.

In practice, the UE 250 may further includes a decision-making module 252 coupled to the parsing module 251. The decision-making module 252 may pre-configure logic for selecting or discarding the refined email information. Specifically, the parsing module 251 may deliver the parsed refined email information to the decision-making module 252. The decision-making module 252 may determine the refined email information for prompting according to the logic of selecting and discarding the refined email information configured by the decision-making module itself. The decision-making module feeds back the refined email information which is determined for prompting to the parsing module 251.

The parsing module 251 delivers the refined email information from the decision-making module 252 to the prompting unit 254. The prompting unit 254 then sends a prompt including the refined email information.

The decision-making module 252 may also coupled to the prompting unit 254 directly and sends the refined email information which is determined for prompting to the prompting unit 254. The prompting unit 254 then sends a prompt including the refined email information. In this case, the parsing module 251 may not send the refined email information it parsed to the prompting unit 254.

Moreover, the UE 250 may further include an email client 253 coupled to the parsing module 251. The parsing module 251 may send the refined email information it parsed or the refined email information from the decision-making module 252 to the email client 253. The email client 253 acquires a corresponding email from email server 230 according to the received refined email information.

Specifically, when receiving the refined email information, the email client 253 may request the storage unit 232 for the email corresponding to the refined email information by sending a POP3 request message carrying the refined email information. When the storage unit 232 receives the refined email information from email client 253, the storage unit 232 looks up for the email corresponding to the refined email information, incorporates the found email into a POP3 response message and sends the response message to the email client 253. It should be noted that since the storage unit 232 is able to determine the refined email information corresponding to the stored email with the existing technology, the storage unit 232 may find the corresponding email with no difficulty according to the refined email information from the email client 253.

In fact, the email server 253 may also connect directly to the decision-making module 252 which may send the refined email information to the email client 253. Then, the email client 253 may acquire the corresponding email according to the refined email information from the decision-making module 252.

Moreover, if the parsing module 251 parses the URI and time stamp from the received EMN, the parsing module 251 may also send the URI and time stamp to the email client 253 which may obtain a corresponding email from email server 230 according to the received URI and time stamp.

Specifically, when receiving the URI and time stamp, the email client 253 may request the storage unit 232 for the email to which the URI and time stamp corresponds by sending a POP3 request message carrying such URI and time stamp. When the storage unit 232 receives the URI and time stamp from the email client 253, the storage unit 232 looks up for the email to which the URI and time stamp corresponds, and incorporates the found email into a POP3 response message and sends to the email client 253. It should be noted that since the storage unit 232 is able to determine the URI and time stamp to which the stored email corresponds with the existing technology, the storage unit 232 may find the corresponding email with no difficulty according to the URI and time stamp from the email client 253.

In addition, the email client 253 may also connect to the prompting unit 254 and send an email reception notification to the prompting unit 254 when receiving the email from the storage unit 232. The prompting unit 254 may send a prompt for receiving the email when receiving the email reception notification so that the user who perceives the prompt may receive the email in time. The detailed method of the prompting unit 254 sending the prompt is the same as the foregoing corresponding method.

In the foregoing, no description is made to the refined email information format. In practice, the refined email information is of various types. The information may be general refined emails information describing the general feature of the emails. For instance, the refined email information may be the total number of the emails in the email account or the number of unretrieved emails in the email account or total number of emails and number of unretrieved emails in the email account or the total number of emails, the number of unretrieved emails, the total number of instant emails and the number of unretrieved instant emails. Alternatively, the refined email information may also be local refined emails information describing the local feature of the emails. For instance, the information may include one or more of the Subject, sender (From), email size, information of the attached file, name of the attached file, priority of the email, etc. or combination thereof.

Usually, the difference among the refined email information may lead to the difference in the corresponding refined email information formats. However, the refined email information formats representing the same refined email information are usually fixed. The specific detailed email information format may also be of various types. One type of general refined email information is presented below.

The total number of emails in the email account:

$$\text{SumMail} = \% \text{ TotalMailNumber}$$

where the TotalMailNumber is a positive integer, the value of which equals the total number of emails in the email account.

The number of unretrieved emails in the email account:

$$NewMail = \%UnRetrievalMailNumber$$

where the UnRetrievalMailNumber is a positive integer, the value of which equals the number of unretrieved emails in the email account.

The number of retrieved emails in the email account:

$$OldMail = \%RetrievaledMailNumber$$

where the %RetrievaledMailNumber is a positive integer, the value of which equals the number of retrieved emails in the email account.

The total number of instant emails in the email account:

SumInstancyMail = % TotalInstancyMailNumber where the TotalInstancyMailNumber is a positive integer, the value of which equals the total number of instant emails in the email account.

The number of unretrieved instant emails in the email account:

$$NewInstancyMail = \%UnRetrievalInstancyMailNumber$$

where the UnRetrievalInstancyMailNumber is a positive integer, the value of which equals the number of unretrieved instant emails in the email account.

The number of retrieved instant emails in the email account:

$$OldInstancyMail = \%RetrievaledInstancyMailNumber$$

where the %RetrievaledInstancyMailNumber is a positive integer, the value of which equals the number of retrieved instant emails in the email account.

In practice, a refined general email information format may also be used to represent a plurality of refined general email information. For instance:

With respect to MailNumber = %MailNumbers, the format of %MailNumbers may be UnRetrievalMailNumber/ TotalMailNumber. Accordingly, MailNumber = "3/6" indicates that there are 6 emails in the email account in total with 3 emails unretrieved.

The format of %MailNumbers may be RetrievaledMailNumber/TotalMailNumber. Accordingly, MailNumber = "3/6" indicates that there are 6 emails in the email account in total with 3 emails retrieved.

The format of %MailNumbers may be RetrievaledMailNumber/UnRetrievalMailNumber/TotalMailNumber. Accordingly, MailNumber = "3/3/6" indicates that there are 6 emails in the email account in total with 3 unretrieved and 3 retrieved.

Similarly, a single general refined email information format may also be used to represent a plurality of general refined email information. For instance,

With respect to InstancyMailNumber = %InstancyMailNumbers, the format of %InstancyMailNumbers may be UnRetrievalInstancyMailNumber/TotalInstancyMailNumber. Accordingly, InstancyMailNumber = "3/6" indicates that there are 6 instant emails in the email account in total with 3 emails unretrieved.

The format of %InstancyMailNumbers may be RetrievaledInstancyMailNumber/TotalInstancyMailNumber. Accordingly, InstancyMailNumber = "3/6" indicates that there are 6 instant emails in the email account in total with 3 emails retrieved.

The format of %InstancyMailNumbers may be RetrievaledInstancyMailNumber/UnRetrievalInstancyMailNumber/TotalInstancyMailNumber. Accordingly, InstancyMailNumber = "3/3/6" indicates that there are 6 instant emails in the email account in total with 3 retrieved and 3 unretrieved.

Moreover, a general refined email information format may also be used to indicate general refined email information of all the emails in the whole email amount and the general refined email information of a specific email (e.g. an instant email) in the email account. For instance:

With respect to AllMailNumber = %AllMailNumbers, the format of %AllMailNumbers may be UnRetrievalMailNumber/TotalMailNumber ( UnRetrievalInstancyMailNumber/TotalInstancyMailNumber ) . Accordingly, AllMailNumber = "3/6(2/3)" indicates that there are 6 emails in the email account in total, with 3 unretrieved and 3 instant, wherein 2 emails are unretrieved among the instant emails.

The format of %AllMailNumbers may be RetrievaledMailNumber/TotalMailNumber ( Retrievaled- InstancyMail-Number/TotalInstancyMailNumber). Accordingly, AllMailNumber = "3/6(2/3)" indicates that there are 6 emails in the email account in total, with 3 retrieved and 3 instant, wherein 2 emails are retrieved among the instant emails.

The method of using one general refined email information format to represent a plurality of general refined email information is not limited to the above-mentioned examples. Rather, arbitrary combination of formats described in these examples may be contemplated. Moreover, the sequence of the contents in the foregoing general refined email information format may be altered and these contents can be combined using other forms, e.g., "*" or "()", etc., except for "/".

In addition, the foregoing descriptions associated with the instant email are just examples of approaches for handling a type of particular emails. In practice, the foregoing same approaches may also be used to handle non-instant emails. There are various ways to determine if an email is urgent. For instance, an email bearing a High priority may be determined as an instant email, while an email bearing a Low priority may be determined as a non-instant email.

In fact, no matter how to configure the general refined email information format, the key is to make the general refined email information formats of the EMN generation module 230 and parsing module 251 compatible with each other so as to ensure that the parsing module 251 may be able to identity the general refined email information format from the EMN generation module 230.

Embodiments of the general refined email information format are illustrated below.

EMBODIMENT ONE: when the general refined email information is the total number of the emails in the email account, the corresponding general refined email information format is illustrated as below.

```
<?xml version=" 1.0" encoding="UTF-8"?>
<!ENTITY % Datetime "CDATA"> <!-- ISO date and time -->
<!ENTITY % URI "CDATA"> <!-- URI designating an e-mail account -->
<!ENTITY % TotalMailNumber "CDATA"> <!-- Total e-mail number information -->
<!ELEMENT emn EMPTY>
<!ATTLIST emn
mailbox %URI; #REQUIRED
timestamp %Datetime; #IMPLIED
SumMail %TotalMailNumber; #IMPLIED
>
```

When giving the actual value for the foregoing format, the general refined email information format including the actual value is illustrated as below.

```
<?xml version="1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
SumMail="6"
<emn/>
```

It can be seen that the foregoing general refined email information format indicates that there are 6 emails in the email account in total at the time of 06:40:00, April. 16,2002.

EMBODIMENT TWO: When the general refined email information is the number of unretrieved emails in the email account, the corresponding general refined email information format is illustrated as below.

```
<?xml version=" 1.0" encoding="UTF-8"?>
<!ENTITY % Datetime "CDATA"> <!--ISO date and time -->
<!ENTITY % URI "CDATA"> <!-- URI designating an e-mail account -->
<!ENTITY % UnRetrievalMailNumber "CDATA"> <!--UnRetrieval e-mail number
information -->
<!ELEMENT emn EMPTY>
<!ATTLIST emn
mailbox %URI; #REQUIRED
timestamp %Datetime, #IMPLIED
NewMail %UnRetrievalMailNumber; #IMPLIED
>
```

When giving the actual value for the foregoing format, the general refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
NewMail="3"
<emn/>
```

It can be seen that the foregoing general refined email information format indicates that there are 3 unretrieved emails in the email account in total at the time of 06:40:00, April. 16, 2002.

EMBODIMENT THREE: when the general refined email information is the total number of emails and the number of unretrieved emails in the email account, the corresponding general refined email information format is illustrated as below.

```
<?xml version=" 1.0" encoding="UTF-8"?>
<!ENTITY % Datetime "CDATA"> <!-- ISO date and time -->
<!ENTITY % URI "CDATA"> <!-- URI designating an e-mail account -->
<!ENTITY % UnRetrievalMailNumber "CDATA"> <!--UnRetrieval e-mail number
information -->
<!ENTITY % TotalMailNumber "CDATA"> <!-- Total e-mail number information -->
<!ELEMENT emn EMPTY>
<!ATTLIST emn
mailbox %URI; #REQUIRED
timestamp %Datetime; #IMPLIED
SumMail %TotalMailNumber; #IMPLIED
NewMail %UnRetrievalMailNumber; #IMPLIED
>
```

When giving the actual value for the foregoing format, the general refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
SumMail="6"
NewMail="3"
<emn/>
```

The above general refined email information format indicates that there are 6 emails in the email account in total, with 3 emails unretrieved, at the time of 06:40:00, April. 16,2002.

EMBODIMENT FOUR: when the general refined email information is the total number of emails and the number of unretrieved emails in the email account, the corresponding general refined email information format cal also be illustrated as below.

```
<?xml version=" 1.0" encoding="UTF-8"?>
<!ENTITY % Datetime "CDATA"> <!-- ISO date and time -->
<!ENTITY % URI "CDATA"> <!-- URI designating an e-mail account -->
<!ENTITY % MailNumbers "CDATA"> <!-- e-mail number information -->
<!ELEMENT emn EMPTY>
<!ATTLIST emn
mailbox %URI; #REQUIRED
timestamp %Datetime; #IMPLIED
MailNumber %MailNumbers; #IMPLIED
>
```

When giving the actual value for the foregoing format, the general refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
MailNumber="3/6"
<emn/>
```

The above general refined email information format indicates that there are 6 emails in the email account in total, with 3 emails unretrieved, at the time of 06:40:00, April. 16,2002.

EMBODIMENT FIVE: when the general refined email information is the total number of emails, the number of unretrieved emails, the number of instant emails and the number of unretrieved instant emails in the email account, the corresponding general refined email information format is illustrated as below.

```
<?xml version=" 1.0" encoding="UTF-8"?>
<!ENTITY % Datetime "CDATA"> <!-- ISO date and time -->
<!ENTITY % URI "CDATA"> <!-- URI designating an e-mail account -->
<!ENTITY % AllMailNumbers "CDATA"> <!-- e-mail number information -->
<!ELEMENT emn EMPTY>
<!ATTLIST emn
mailbox %URI; #REQUIRED
timestamp %Datetime; #IMPLIED
AllMailNumber %AllMailNumbers; #IMPLIED
>
```

When giving the actual value for the foregoing format, the general refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
AllMailNumber="3/6(2/4)"
<emn/>
```

The above general refined email information format indicates that there are 6 emails in the email account in total, with 3 unretrieved, 4 instant, and 2 unretrieved and instant, at the time of 06:40:00, April. 16, 2002.

EMBODIMENT SIX: when the general refined email information is the total number of emails, the number of unretrieved emails, the number of instant emails and the number of unretrieved instant emails in the email account, the corresponding general refined email information format may also be illustrated as below.

```
<?xml version=" 1.0" encoding="UTF-8"?>
<!ENTITY % Datetime "CDATA"> <!-- ISO date and time -->
<!ENTITY % URI "CDATA"> <!-- URI designating an e-mail account -->
<!ENTITY % MailNumbers "CDATA"> <!-- e-mail number information -->
<!ENTITY % InstancyMailNumbers "CDATA"> <!-- Instancy e-mail number
information -->
<!ELEMENT emn EMPTY>
<!ATTLIST emn
mailbox %URI; #REQUIRED
timestamp %Datetime; #IMPLIED
MailNumber %MailNumbers; #IMPLIED
InstancyMailNumber %InstancyMailNumbers; #IMPLIED
>
```

When giving the actual value for the foregoing format, the general refined email information format including the actual value is illustrated as below.

```
<?xml version="1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
Mailbox="mailat:user@wapforum.org"
Timestamp="2002-04-16T06:40:00Z"
MailNumber="3/6"
InstancyMailNumber="2/4"
<emn/>
```

The above general refined email information format indicates that there are 6 emails in the email account in total, with 3 unretrieved, 4 instant, and 2 unretrieved and instant, at the time of 06:40:00, April. 16, 2002.

The "http://www.openmobilealliance.com/tech/DTD/emn.dtd", mentioned in each preceding embodiment and the following embodiments, refers to a website storing the general refined email information. The parsing module 251 may perform the foregoing parsing operation according to the general refined email information format it configured, or obtain the general refined email information format from the foregoing website and perform the foregoing parsing operation according to the obtained general refined email information format.

Like the foregoing general refined email information, the local refined email information format may also be of various forms, one of which may be presented as below.

Index number of the new email

An IndexNum identifier may be used in the EMN. The IndexNum identifier may be in a form of natural number, starting from 1 to the order number of new email. The first newly arrived email can be expressed as IndexNum = 1.

Sender of the new email

A MailFrom identifier with a URI format specified by the EMN can be used in the EMN. For an email sent from Alice using the email address Alice@sample.com, the MailFrom identifier in the EMN can be expressed as MailFrom = "Alice <Alice@sample.com>".

Subject of the new email

A MailSubject identifier in a form of character string can be used in the EMN. The MailSubject identifier in the EMN can be expressed as MailSubject = "Hi, Welcome!".

Mail date of the new email

A MailDate identifier with a date format specified by the EMN can be used in the EMN. The MailDate in the EMN can be expressed as MailDate = "2002-04-16T06:40:00Z".

Existence of attached file

An AttachFile identifier in a form of character string can be used in the EMN. In the EMN, the email including an attached file may be expressed as AttachFile = "True".

Mail size

A MailSize identifier in a form of natural number can be used in the EMN. To let the user know the mail size, when a new email arrives, the overlarge email may not be processed in the mobile terminal. In the EMN, the mail size can be expressed as MailSize = "100,000".

The number of attached files

An AttachFileNum identifier in a form of natural number can be used in the EMN. In the EMN, the number of acted files in an email may be expressed as AttachFileNum = 3.

Name of the attached file

An AttachFileName identifier in a form of character string can be used in the EMN. In the EMN, the names of two attached files in the email may be expressed as AttachFileName = "<myPicture 001.jpg>; <myPicture 002.jpg>".

Person receiving a carbon copy

A MailCC identifier with a URI format specified by the EMN can be used in the EMN. In the EMN, the person who receives the carbon copy can be expressed as MailCC = "Alice < Alice@sample.com >; Thomas < Thomas@sample.com >".

Index number of the email in the server

A MailIndexNum identifier in a form of integer can be used in the EMN. When a new email arrives, an email server proxy gateway may fill an index number of the email in the server in the email notification. PushEmail user proxy may pass this information to an email module of the mobile terminal. This module may initiate a request to the email server according to this index number and then retrieve this email directly. In the EMN, the MailIndexNum can be expressed as MailIndexNum = 001.

Mail Priority

A MailPriority identifier in a form of character string can be used in the EMN. When a new email arrives, the user may be informed of the extent of urgency according the mail priority. In the EMN, the MailPriority can be expressed as MailPriority = "urgent".

The local refined email information is not merely limited to the foregoing forms. Moreover, the format used to indicate the content of the local refined email information is not merely limited to the foregoing forms, neither.

Descriptions of the format carrying local refined email information are made in connection with below embodiments.

EMBODIMENT SEVEN: when information such as sender, subject, mail date, attached file information, mail size, etc. is required in the EMN, the local refined email information format may be given as below.

```
<?xml version=" 1.0" encoding="UTF-8"?>
<!ENTITY % Datetime "CDATA">
<! ENTITY % URI "CDATA">
<!ELEMENT emn (emnMailInfo)>
<!ATTLIST emn
  mailbox %URI; #REQUIRED
  timestamp %Datetime; #IMPLIED
>
<!ELEMENT emnMailInfo EMPTY>
<!ATTLIST emnMailInfo
  IndexNum CDATA #REQUIRED
  MailFrom %URI; #REQUIRED
  MailSubject CDATA #REQUIRED
  MailDate %Datetime; #REQUIRED
  AttachFile CDATA #IMPLIED
  MailSize CDATA #IMPLIED
```

When giving the actual value for the foregoing format, the local refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
mailbox="mailat:Bob@sample.com"
timestamp="2002-04-16T06:40:00Z"
<emailInfo>
IndexNum ="1"
MailFrom = "Alice <Alice@sample.com>"
MailSubject = "Hi, Welcome!"
MailDate = "2002-04-16T06:40:00Z"
AttachFile = "True"
MailSize = "100,000"
</emailInfo>
</emn>
<?xml version="1.0" encoding="UTF-8"?>
<!DOCTYPE emn SYSTEM "C:\Documents and
Settings\Administrator\Desktop\Untitled2.dtd">
<emn
  mailbox="mailat:Bob@sample.com"
  timestamp="2002-04-16T06:40:00Z">
  <emnMailInfo
        IndexNum="1"
        MailDate=" Alice <Alice@sample.com>"
        MailFrom=" Hi, Welcome!"
        MailSubject="2002-04-16T06:40:00Z "
        AttachFile=" True "
        MailSize=" 100,000"/>
</emn>
```

The above local refined email information format indicates that at the time of 06:40:00, April. 16, 2002, Alice sends an email with an email address of Alice@sample.com to Bob@sample.com. The subject of the email is "Hi, Welcome!." An attached file is included. The whole mail size is 100,000 bytes.

The following format may also be adopted with respect to the local refined email information carrying the same information.

```
<?xml version=" 1.0" encoding="UTF-8"?>
<!ENTITY % Datetime "CDATA">
<! ENTITY % URI "CDATA">
<!-- edited with XMLSPY v5 rel. 4 U (http://www.xmlspy.com) by Registred
(Registred) -->
<!ELEMENT emn (mailbox+, timestamp*, emnMailInfo*)>
<!ELEMENT emnMailInfo EMPTY>
<!ATTLIST emnMailInfo
 IndexNum CDATA #REQUIRED
  MailFrom %URI; #REQUIRED
  MailSubject CDATA #REQUIRED
  MailDate %Datetime; #REQUIRED
 AttachFile CDATA #IMPLIED
  MailSize CDATA #IMPLIED
>
<!ELEMENT mailbox (#PCDATA)>
<!ELEMENT timestamp (#PCDATA)>
```

When giving the actual value for the foregoing format, the local refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat:Bob@sample.com"</mailbox>
<timestamp>"2002-04-16T06:40:00Z"</timestamp>
<emnMailInfo>
IndexNum = "1"
MailFrom = "Alice <Alice@sample.com>"
MailSubject = "Hi, Welcome!"
MailDate = "2002-04-16T06:40:00Z"
AttachFile = "True"
MailSize = "100,000"
</emnMailInfo>
</emn>
```

The above local refined email information format still indicates that at the time of 06:40:00, April. 16, 2002, Alice sends an email with an email address of Alice@sample.com to Bob@sample.com. The subject of the email is "Hi, Welcome!." An attached file is included. The whole mail size is 100,000 bytes.

EMBODIMENT EIGHT: other than the basic local refined email information such as sender, subject, mail date, attached file information, mail size, etc., the EMN may further carry some additional local refined email information, such as the number of attached files, CC list, mail priority, internal index number of the mail in the server, etc.. The corresponding local refined email information format is given below.

```
<?xml version=" 1.0" encoding="UTF-8"?>
<!ENTITY %Datetime "CDATA">
<!ENTITY %URI "CDATA">
<!ELEMENT emnMailInfo EMPTY >
<!ATTLIST emnMailInfo
 IndexNum CDATA; #REQUIRED
MailFrom %URI; #REQUIRED
MailSubject CDATA; #REQUIRED
MailDate %Datetime; #REQUIRED
AttachFile CDATA; # IMPLIED
```

```
MailSize CDATA; # IMPLIED
AttachFileNum CDATA; # IMPLIED
AttachFileName CDATA; # IMPLIED
MailCC %URI # IMPLIED
MailIndexNum CDATA # IMPLIED
MailPriority CDATA # IMPLIED
>
<!ELEMENT emn (emnEmailInfo+)>
<!ATTLIST emn
mailbox %URI; #REQUIRED
timestamp %Datetime; #IMPLIED
>
```

When giving the actual value for the foregoing format, the local refined email information format including the actual value is illustrated as below.

```
<?xml version=" 1.0" encoding="UTF-8">
<!DOCTYPE emn PUBLIC "-//OMA/DTD EMN 1.0//EN"
"http://www.openmobilealliance.com/tech/DTD/emn.dtd">
<emn
mailbox="mailat:Bob@sample.com"
timestamp="2002-04-16T06:40:00Z">
<emailInfo
IndexNum ="1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "myPicutre001.jpg"
MailCC = "Thomas < Thomas@sample.com >"
MailIndexNum = "001"
MailPriority = "urgent" />
</emn>
```

The above local refined email information format indicates that at the time of 06:40:00, April. 16, 2002, Alice sent an email to <u>Bob@sample.com</u>, with CC to Thomas (Thomas@sample.com), using an email address of <u>Alice@sample.com.</u> The subject of the email is "Hi, Welcome!." The email also includes an attached file with a size of 100k, named "MyPicutre001.jpg." The priority of this mail is "Urgent." The index number of the mail in the server is 001.

The following format may also be adopted with respect to the local refined email information carrying the same information.

```
<?xml version=" 1.0" encoding="UTF-8"?>
<!ENTITY % Datetime "CDATA">
<!ENTITY % URI "CDATA">
<!ELEMENT emn (mailbox, timestamp, emnMailInfo*)>
<!ELEMENT mailbox (#PCDATA)>
<!ELEMENT timestamp (#PCDATA)>
<!ELEMENT emnMailInfo EMPTY >
<!ATTLIST emnMailInfo
IndexNum CDATA; #REQUIRED
MailFrom %URI; #REQUIRED
MailSubject CDATA; #REQUIRED
MailDate %Datetime; #REQUIRED
AttachFile CDATA; # IMPLIED
MailSize CDATA; # IMPLIED
AttachFileNum CDATA; # IMPLIED
AttachFileName CDATA; # IMPLIED
MailCC %URI # IMPLIED
MailIndexNum CDATA # IMPLIED
MailPriority CDATA #IMPLIED
```

>

When giving the actual value for the foregoing format, the local refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat:Bob@sample.com"</mailbox>
<timestamp>"2002-04-16T06:40:00Z"</mailbox>
<emailInfo>
IndexNum = "1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "myPicutre001.jpg"
MailCC = "Thomas < Thomas@sample.com >"
MailIndexNum = "001"
MailPriority = "urgent"
</emailInfo>
</emn>
```

The above local refined email information format still indicates that at the time of 06:40:00, April. 16, 2002, Alice sent an email to Bob@sample.com, with CC to Thomas (Thomas@sample.com), using an email address of Alice@sample.com. The subject of the email is "Hi, Welcome!." The email also includes an attached file with a size of 100k, named "MyPicutre001.jpg." The priority of this mail is "Urgent." The index number of the mail in the server is 001.

In practice, the local refined email information and the general refined email information can be complementary to each other for a thorough description of the email information so that the email information can be obtained more completely and effectively. There may be various types for the format after the combination of the general refined email information and the local refined email information. Detailed description of some formats is made below in connection with the embodiments.

EMBODIMENT NINE: when the refined email information includes the total number of emails in the email account, and the sender, subject, attached file information, size, etc., of the email, the corresponding refined email information format is given below.

```
<?xml version="1.0" encoding="UTF-8"?>
<!ENTITY % Datetime "CDATA">
<!ENTITY % URI "CDATA">
<!ENTITY % TotalMailNumber "CDATA">
<!ATTLIST emnMailInfo
  IndexNum CDATA #REQUIRED
  MailFrom %URI; #REQUIRED
  MailSubject CDATA #REQUIRED
  MailDate %Datetime; #REQUIRED
  AttachFile CDATA #IMPLIED
  MailSize CDATA #IMPLIED
  AttachFileNum CDATA #IMPLIED
  AttachFileName CDATA #IMPLIED
  MailCC %URI; #IMPLIED
  MailIndexNum CDATA #IMPLIED
  MailPriority CDATA #IMPLIED
>
<!ELEMENT emn (emnEmailInfo+)>
<!ATTLIST emn
  mailbox %URI; #REQUIRED
  timestamp %Datetime; #IMPLIED
  SumMail %TotalMailNumber; #IMPLIED
```

13

>

When giving the actual value for the foregoing format, the refined email information format including the actual value is illustrated as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat:Bob@sample.com"</mailbox>
<timestamp>"2002-04-16T06:40:00Z"</timestamp>
<SumMail>"2"</SumMail>
<emailInfo>
IndexNum ="1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "<myPicutre001.jpg>"
MailCC = "Jones < Jones@sample.com >"
MailIndexNum = "013"
MailPriority = "Normal"
</emailInfo>
<emailInfo>
IndexNum = "2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MailIndexNum = "014"
MailPriority = "Urgent"
</emailInfo>
</emn>
```

The above refined email information format indicates that Bob, with an email address of Bob@sample.com has two new emails at the time of 06:40:00, April. 16, 2002. One of the emails, with a subject of "Hi, Welcome!," is sent from Alice by e-Mail address Alice@sample.com at the time of 06:40:00, April. 16, 2002. Alice also CC this mail to Jone (Jones@sample.com). This email also attached a file with a size of 100k, named "MyPicture001.jpg." The priority of the mail is "Normal." The index number of this mail in the server is 013. Meanwhile, Bob also receives an email from Thomas through Thomas@sample.com at the time of 06:30:00, April, 16, 2002. The subject of this mail is "Hi, I am Back From USA." The email also attached 2 files, with a size of 500k, named "PicInUSA.jpg" and "TravelInUSA.doc" respectively. The priority of the email is "Urgent." The index number of the email in the server is 014.

When receiving the refined email information, the UE 250 may flexibly handles the email subsequent according to the received refined email information. Detailed description is now made to the subsequent operations upon the email utilizing the refined email information in connection with the below embodiments.

EMBODIMENT TEN: when the refined email information includes email account information, the email account information can be used to configure the email client. The corresponding refined email information format is illustrated as in embodiment nine. Specifically, the format can be expressed as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat :Bob@sample.com"</mailbox>
<mailbox> "POP://Bob@pop.sample.com"</mailbox>
<mailbox>"SMTP://Bob@smtp.sample.com"</mailbox>
```

```
<timestamp>"2002-04-16T06:40:00Z"</timestamp>
<SumMail>"2"</SumMail>
<emailInfo>
IndexNum = "1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum= "1"
AttachFileName = "<myPicutre001.jpg>"
MailCC = "Jones < Jones@sample.com >"
MallindexNum = "013"
MailPriority = "Normal"
</emailInfo>
<emailInfo>
IndexNum = "2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MailIndexNum = "014"
MailPriority = "Urgent"
</emailInfo>
</emn>
```

After the decision-making module 252 in the UE 250 receives the information carried in the EMN, subsequent operations can be performed upon the emails according to a pre-configured operation rule. Before subsequent operations are performed upon the emails, it is necessary to configure the email account first. When the email account has not been configured, the email client 253 needs to retrieve the follow information which is contained in the EMN and delivered from the decision-making module 252.

```
<mailbox> "POP://Bob@pop.sample.com"</mailbox>
<mailbox>"SMTP://Bob@smtp.sample.com"</mailbox>
```

Then, the email client 253 configures the receiving and sending information of its email. For instance, the configuration information of the mail receiving server may be filled with pop.sample.com; the user name of the mail receiving server may be filled with Bob@sample.com; the configuration information of the mail sending server may be filled with smtp.sample.com; the user name of the mail sending server may be filled with Bob@sample.com. After completion of the above configurations, the server client 253 is initiated and sends a connection request to the corresponding server of the email account. After verification of the password corresponding to the user same that use enters, the email client 253 may setup connection with the email server for further operation of the emails.

EMBODIMENT ELEVEN: when the refined email information includes the total number of emails in the email account, and the sender, subject, attached file information, size, etc., of the email, the above information can be utilized to perform receiving operation upon the email. The corresponding refined email information format is illustrated as in embodiment nine. Specifically, the format can be expressed as below.

```
<?xml version="1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat:Bob@sample.com"</mailbox>
<timestamp>"2002-04-16T06:40:00Z"</timestamp>
<SumMail>"2"</SumMail>
<emailInfo>
IndexNum ="1"
MailFrom = "Alice <Alice@sample.com>"
MailSubject = "Hi, Welcome!"
```

```
MailDate = "2002-04-16T06:40:00Z"
AttachFile = "True"
MailSize = "100,000"
AttachFileNum = "1"
AttachFileName = "<myPicutre001.jpg>"
MailCC = "Jones < Jones@sample.com >"
MailIndexNum = "013"
MailPriority = "Normal"
</emailInfo>
<emailInfo>
IndexNum ="2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MailIndexNum = "014"
MailPriority = "Urgent"
</emailInfo>
</emn>
```

After the decision-making module 252 in the UE 250 receives the information carried in the EMN, receiving operation can be performed directly upon the email whose MailPriority is "Urgent" according to a pre-configured operation rule. Specifically, the email receiving process is described below.

The decision-making module 252 sends the refined email information of the email to be received to the email client 253. The refined email information includes local refined email information and general refined email information. The local refined email information is presented as below.

```
<emailInfo>
IndexNum = "2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MailIndexNum = "014"
MailPriority = "Urgent"
</emailInfo>
```

The general refined email information is presented as below.

```
<mailbox>"mailat:Bob@sample.com"</mailbox>
```

When the email server 253 receives the above refined email information, the email server may receives directly the email to which the refined email information corresponds. Moreover, the email client 253 may also control the prompting unit 254 for prompting so as to remind the user to check mail.

EMBODIMENT TWELVE: when the refined email information includes the total number of emails in the email account, and the sender, subject, attached file information, mail size, etc., of the email, the above information can be utilized to perform forwarding operation upon the email. The corresponding refined email information format is illustrated as in embodiment nine. Specifically, the format can be expressed as below.

```
<?xml version=" 1.0" encoding="UTF-8"?>
<!DOCTYPE emn PUBLIC "-//OMA/DTD EMN 1.0//EN"
"http://www.openmobilealliance.com/tech/DTD/emn.dtd">
<emn>
<mailbox>"mailat:Bob@sample.com"</mailbox>
<timestamp>"2002-04-16T06:40:00Z"</timestamp>
```

```
<SumMail>"2"</SumMail>
<emailInfo>
IndexNum = "1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "<myPicutre001.jpg>"
MailCC = "Jones < Jones@sample.com >"
MailIndexNum = "013"
MailPriority = "Normal"
</emailInfo>
<emailInfo>
IndexNum = "2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MailIndexNum = "014"
MailPriority = "Urgent"
</emailInfo>
</emn>
```

After the decision-making module 252 in the UE 250 receives the information carried in the EMN, forwarding operation can be performed upon the email whose sender is Alice@sample.com according to a pre-configured operation rule. Specifically, the email forwarding process is described below.

The decision-making module 252 sends the refined email information of the email to be forwarded to the email client 253. The refined email information includes local refined email information and general refined email information. The local refined email information is presented as below.

```
<emailInfo>
IndexNum ="1"
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "<myPicutre001.jpg>"
MailCC = "Jones < Jones@sample.com >"
MailIndexNum = "013"
MailPriority = "Normal"
</emailInfo>
```

The general refined email information is presented as below.

```
<mailbox>"mailat:Bob@sample.com"</mailbox>
```

When sending the above refined email information to the email client 253, the email client 253 is initiated. The user may input the destination email address to which the email will be forwarded, CC list, mail subject, mail body, etc., in which:
The destination email address to which the email will be forward: Alice@company.com CC list: Thomas@company.com Email subject: "For Your Information"

When the server client 253 receives the above information input by the user, the server client may initiate a forwarding operation directly at the email server. Accordingly, the cumbersome operations, i.e., receiving the email locally and then forwarding the email, may be avoided. The server client 253 may also control the prompting unit 254 to send a prompt so as to remind the user of the completion of the email forwarding operation.

EMBODIMENT THIRTEEN: when the refined email information includes the total number of emails in the email account, and the sender, subject, attached file information, size, etc., of the email, the above information can be utilized to perform deleting operation upon the email. The corresponding refined email information format is illustrated as in embodiment nine. Specifically, the format can be expressed as below.

```
<?xml version=" 1.0" encoding="UTF-8"'?>
<!DOCTYPE emn PUBLIC "-//OMA/DTD EMN 1.0//EN"
"http://www.openmobilealliance.com/tech/DTD/emn.dtd">
<emn>
<mailbox>"mailat :Bob@sample.com"</mailbox>
<timestamp>"2002-04-16T06:40:00Z"</timestamp>
<SumMail>"2"</SumMail>
<emailInfo>
IndexNum = "1 "
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "<myPicutre001.jpg>"
MailCC = "Jones < Jones@sample.com >"
MailIndexNum = "013"
MailPriority = "Normal"
</emailInfo>
<emailInfo>
IndexNum = "2"
MailFrom = "Thomas <Thomas@sample.com>"
MailSubject = "Hi, I am Back From USA."
MailDate = "2002-04-16T06:30:00Z"
AttachFile = "True"
MailSize = "500,000"
AttachFileNum = "2"
AttachFileName = "<PicInUSA.jpg> ;<TravelInUSA.doc>"
MaillndexNum = "014"
MailPriority = "Urgent"
</emailInfo>
</emn>
```

After the decision-making module 252 in the UE 250 receives the information carried in the EMN, deleting operation can be performed upon the email whose sender is Alice@sample.com according to a pre-configured operation rule. Specifically, the email deleting process is described below.

The decision-making module 252 sends the refined email information of the email to be deleted to the email client 253. The refined email information includes local refined email information and general refined email information. The local refined email information is presented as below.

```
<emailInfo>
IndexNum = " 1 "
MailFrom = "Alice <Alice@sample.com>"
MailSubject = "Hi, Welcome!"
MailDate = "2002-04-16T06:40:00Z"
AttachFile = "True"
MailSize = "100,000"
AttachFileNum = "1"
AttachFileName = "<myPicutre001jpg>"
MailCC = "Jones < Jones@sample.com >"
MailIndexNum = "013"
MailPriority = "Normal"
</emailInfo>
```

The general refined email information is presented as below.

```
<mailbox>"mailat:Bob@sample.com"</mailbox>
```

When the email client 253 receives the above refined email information, the email client 253 may initiate a deleting operation at the email server without receiving the email to the local first. The server client 253 may also control the prompting unit 254 to send a prompt so as to remind the user of the completion of the email deleting operation.

According to a pre-determined rule, the decision-making module 252 may determine the subsequent operations upon the emails, for instance, receiving selected email, receiving head information of the selected email, selecting body of the received email, selecting the attached file of the received email, forwarding email, deleting email, replying email, etc. Moreover, the decision-making module 252 may control the email client 253 to conduct subsequent email operations with the email server.

Specifically, the subsequent email operations may have the same principle as the foregoing server client 253 retrieving the email. That is, the decision-making module 252 sends the refined email information of the email to be operated subsequently to the email client 253. The email client 253 may send email operation instruction to the storage unit 232 in the form of a POP3 request message carrying the refined email information. The storage unit 232, when receiving the email operation instruction from the server client 253, looks up for the corresponding email to which the refined email information contained in the email operation instruction corresponds, and performs subsequent operations specified by the email operation instruction upon the found email.

It can be seen from the above that the system, method and apparatus for implementing email notification according to embodiments of the present invention generate and refine the email notification information in the email account of the UE. As such, the UE may be able to obtain various refined email information and perform subsequent email operation flexibly according to these refined email information. Accordingly, the user may enjoy a better user experience and have a better user satisfaction.

The above embodiments further illustrate the purpose, technical solution and advantages of the present invention. It is understood that the foregoing embodiments are merely examples of the present invention, and are not intended to set limitation to the present invention.

**Claims**

1. A system for implementing email notification, **characterized in** comprising
   an email notification, EMN, generation module (231), configured to generate refined email information for a received email according to a configured refined email information format and send the refined email information, wherein the configured refined email information format is used to indicate the content of the refined email information; and
   a user equipment, UE (250), having a parsing module (251), wherein the parsing module is configured to obtain parsed refined email information by parsing the refined email information from the EMN generation module according to the configured refined email information format;
   wherein the refined email information is at least one of the following information:
   total number of emails in an email accountors which the received email was received
   number of unretrieved emails in the email account;
   number of retrieved emails in the email account;
   total number of instant emails in the email account;
   number of unretrieved instant emails in the email account;
   number of retrieved instant emails in theemail account;
   subject of the received email;
   sender of the received email;
   size of the received email ;
   information of attached file of the received email index number of the received email in the served end
   priority of the received email
   **characterized in that** the UE further comprises
   a decision-making module (252), configured to determine the parsed refined email information for prompting according to a configured logic of selecting and discarding the parsed refined email information and
   a prompting unit (254), configured to send a prompt including the parsed refined email information for prompting.

2. The system of claim 1, **characterized in that**, the UE further comprises
   an email client (253), configured to perform with a coupled email server (230) under the control of the decision-making module (252), at least one of the following email operations:

receiving head information of the email, receiving body of the email, receiving an attached file of the email, forwarding the email, deleting the email, replying the email; and
the decision-making module (252) is further configured to control the email client to perform at least one of the email operations with the coupled email server according to a configured operation rule.

3. The system of claim 1 or 2, **characterized in that**,
the EMN generation module (231) is further configured to send a received email and the system further comprises a storage unit (232), configured to receive and save the email from the EMN generation module.

4. The system of claim 3, **characterized in that**, the UE further comprises
an email client (253), configured to obtain an email from the storage unit (232) according to the parsed refined email information.

5. The system of claim 2, **characterized in that**,
the email client (253) is further configured to send an email reception notification to the prompting unit when receiving an email; and
the prompting unit (254) is further configured to send a prompt for receiving an email according to the email reception notification.

6. The system of claim 4 or 5, **characterized in that**, the email client (253) is further configured to configure its email sending and receiving information according to the parsed refined email information.

7. A user equipment, UE (250), for implementing email notification, comprising a parsing module (251), configured to receive refined email information of an email, wherein the refined email information is generated in response to an email server receiving the email, according to a configured refined email information format, wherein the configured refined email information format is used to indicate the content of the refined email information; and obtain parsed email information by parsing the refined email information according to the configured refined email information format;
wherein the refined email information is at least one of the following information:
total number of emails in an email account on which the received email was received;
number of unretrieved emails in mail account;
number of retrieved emails in the email account;
total number of instant emails in the email account;
number of unretrieved instant emails in the email account;
number of retrieved instant emails in the email account;
subject of the received email ;
sender of the received email;
size of the received email
information of attached file of the received email;
index number of the received email in the server; and
priority of an email **characterized in that** the UE further comprises
a decision-making module (252), configured to determine the parsed refined email information for prompting according to its configured logic of selecting and discarding. the parsed refined email information: and
a prompting unit (254), configured to send a prompt including the parsed relined email information for prompting.

8. The UE of claim 7, **characterized in** further comprising
an email client (253), configured to perform with a coupled email server (230) under the control of the decision-making module (252), at least one of the following email operations:
receiving head information of the email, receiving body of the email, receiving an attached file of the email, forwarding the email, deleting the email, replying the email;
wherein, the decision-making module is further configured to control the email client to perform at least one of the email operations with the coupled email server according to a pre-configured operation rule.

9. The UE of claim 7 **characterized in** further comprising
a email client (253), configured to obtain the email from the email server according to the parsed refined email information.

10. The UE of claim 8, **characterized in that**,

the email client (253) is further configured to send an email reception notification to the prompting unit when receiving the email; and the UE further comprises

a prompting unit (254), configured to receive the email reception notification and send a prompt for receiving the email according to the email reception notification.

**11.** The UE of claim 8, **characterized in that**, the email client (253) is further configured to configure its email receiving and sending information according to the parsed refined email information.

**Patentansprüche**

**1.** System zum Implementieren einer E-Mail-Benachrichtigung, **dadurch gekennzeichnet, dass** es Folgendes umfasst:

ein E-Mail-Benachrichtigungs-Erzeugungsmodul, EMN-Erzeugungsmodul, (231), das konfiguriert ist, verfeinerte E-Mail-Informationen für eine empfangene E-Mail in Übereinstimmung mit einem konfigurierten Format der verfeinerten E-Mail-Informationen zu erzeugen und die verfeinerten E-Mail-Informationen zu senden, wobei das konfigurierte Format der verfeinerten E-Mail-Informationen verwendet wird, um die Inhalte der verfeinerten E-Mail-Informationen anzugeben; und

ein Anwendergerät, UE, (250), das ein Pars-Modul (251) besitzt, wobei das Pars-Modul konfiguriert ist, geparste verfeinerte E-Mail-Informationen durch Parsen der verfeinerten E-Mail-Informationen von dem EMN-Erzeugungsmodul in Übereinstimmung mit dem konfigurierten Format der verfeinerten E-Mail-Informationen zu erhalten;

wobei die verfeinerten E-Mail-Informationen wenigstens eine der folgenden Informationen umfassen:

die Gesamtzahl der E-Mails in einem E-Mail-Konto, in dem die empfangene E-Mail empfangen wurde;
die Anzahl der nicht abgerufenen E-Mails in dem E-Mail-Konto;
die Anzahl der abgerufenen E-Mails in dem E-Mail-Konto;
die Gesamtzahl der Sofort-E-Mails in dem E-Mail-Konto;
die Anzahl der nicht abgerufenen Sofort-E-Mails in dem E-Mail-Konto;
die Anzahl der abgerufenen Sofort-E-Mails in dem E-Mail-Konto;
den Betreff der empfangenen E-Mail;
den Absender der empfangenen E-Mail;
die Größe der empfangenen E-Mail;
die Informationen über eine angefügte Datei der empfangenen E-Mail;
die Indexnummer der empfangenen E-Mail in dem Server; und
die Priorität der empfangenen E-Mail,
**dadurch gekennzeichnet, dass** das UE ferner Folgendes umfasst:
ein Entscheidungstreff-Modul (252), das konfiguriert ist, die geparsten verfeinerten E-Mail-Informationen für das Auffordern in Übereinstimmung mit einer konfigurierten Logik des Auswählens und des Verwerfens der geparsten verfeinerten E-Mail-Informationen zu bestimmen; und
eine Aufforderungseinheit (254), die konfiguriert ist, eine Aufforderung zu senden, die die geparsten verfeinerten E-Mail-Informationen für das Auffordern enthält.

**2.** System nach Anspruch 1, **dadurch gekennzeichnet, dass** das UE ferner Folgendes umfasst:

einen E-Mail-Client (253), der konfiguriert ist, mit einem gekoppelten E-Mail-Server (230) unter der Steuerung des Entscheidungstreff-Moduls (252) wenigstens eine der folgenden E-Mail-Operationen auszuführen:
Empfangen der Kopfinformationen der E-Mail, Empfangen des Körpers der E-Mail, Empfangen einer angefügten Datei der E-Mail, Weiterleiten der E-Mail, Löschen der E-Mail, Antworten auf die E-Mail; und
wobei das Entscheidungstreff-Modul (252) ferner konfiguriert ist, den E-Mail-Client zu steuern, wenigstens eine der E-Mail-Operationen mit dem gekoppelten E-Mail-Server in Übereinstimmung mit einer konfigurierten Betriebsregel auszuführen.

**3.** System nach Anspruch 1 oder 2, **dadurch gekennzeichnet, dass**
das EMN-Erzeugungsmodul (231) ferner konfiguriert ist, eine empfangene E-Mail zu senden; wobei das System ferner Folgendes umfasst:

eine Speichereinheit (232), die konfiguriert ist, die E-Mail von dem EMN-Erzeugungsmodul zu empfangen und zu sichern.

4. System nach Anspruch 3, **dadurch gekennzeichnet, dass** das UE ferner Folgendes umfasst:

einen E-Mail-Client (253), der konfiguriert ist, eine E-Mail von der Speichereinheit (232) in Übereinstimmung mit den geparsten verfeinerten E-Mail-Informationen zu erhalten.

5. System nach Anspruch 2, **dadurch gekennzeichnet, dass**

der E-Mail-Client (253) ferner konfiguriert ist, eine E-Mail-Empfangsbenachrichtigung an die Aufforderungseinheit zu senden, wenn er eine E-Mail empfängt; und
die Aufforderungseinheit (254) ferner konfiguriert ist, eine Aufforderung zum Empfangen einer E-Mail in Übereinstimmung mit der E-Mail-Empfangsbenachrichtigung zu senden.

6. System nach Anspruch 2, 4 oder 5, **dadurch gekennzeichnet, dass** der E-Mail-Client (253) ferner konfiguriert ist, seine E-Mail-Sende- und -Empfangsinformationen in Übereinstimmung mit den geparsten verfeinerten E-Mail-Informationen zu konfigurieren.

7. Anwendergerät, UE, (250), zum Implementieren einer E-Mail-Benachrichtigung, die Folgendes umfasst:

ein Pars-Modul (251), das konfiguriert ist, verfeinerte E-Mail-Informationen einer E-Mail zu empfangen, wobei die verfeinerten E-Mail-Informationen als Reaktion darauf, dass ein E-Mail-Server die E-Mail empfängt, in Übereinstimmung mit einem konfigurierten Format der verfeinerten E-Mail-Informationen erzeugt werden, wobei das konfigurierte Format der verfeinerten E-Mail-Informationen verwendet wird, um die Inhalte der verfeinerten E-Mail-Informationen anzugeben; und geparste E-Mail-Informationen durch Parsen der verfeinerten E-Mail-Informationen in Übereinstimmung mit dem konfigurierten Format der verfeinerten E-Mail-Informationen zu erhalten; wobei die verfeinerten E-Mail-Informationen wenigstens eine der folgenden Informationen umfassen:
die Gesamtzahl der E-Mails in einem E-Mail-Konto, in dem die empfangene E-Mail empfangen wurde;
die Anzahl der nicht abgerufenen E-Mails in dem E-Mail-Konto;
die Anzahl der abgerufenen E-Mails in dem E-Mail-Konto;
die Gesamtzahl der Sofort-E-Mails in dem E-Mail-Konto;
die Anzahl der nicht abgerufenen Sofort-E-Mails in dem E-Mail-Konto;
die Anzahl der abgerufenen Sofort-E-Mails in dem E-Mail-Konto;
den Betreff der empfangenen E-Mail;
den Absender der empfangenen E-Mail;
die Größe der empfangenen E-Mail;
die Informationen über eine angefügte Datei der empfangenen E-Mail;
die Indexnummer der empfangenen E-Mail in dem Server; und
die Priorität einer E-Mail,
**dadurch gekennzeichnet, dass** das UE ferner Folgendes umfasst:
ein Entscheidungstreff-Modul (252), das konfiguriert ist, die geparsten verfeinerten E-Mail-Informationen für das Auffordern in Übereinstimmung mit seiner konfigurierten Logik des Auswählens und des Verwerfens der geparsten verfeinerten E-Mail-Informationen zu bestimmen; und
eine Aufforderungseinheit (254), die konfiguriert ist, eine Aufforderung zu senden, die die geparsten verfeinerten E-Mail-Informationen für das Auffordern enthält.

8. UE nach Anspruch 7, **dadurch gekennzeichnet, dass** es ferner Folgendes umfasst:

einen E-Mail-Client (253), der konfiguriert ist, mit einem gekoppelten E-Mail-Server (230) unter der Steuerung des Entscheidungstreff-Moduls (252) wenigstens eine der folgenden E-Mail-Operationen auszuführen:
Empfangen der Kopfinformationen der E-Mail, Empfangen des Körpers der E-Mail, Empfangen einer angefügten Datei der E-Mail, Weiterleiten der E-Mail, Löschen der E-Mail, Antworten auf die E-Mail; und
wobei das Entscheidungstreff-Modul ferner konfiguriert ist, den E-Mail-Client zu steuern, wenigstens eine der E-Mail-Operationen mit dem gekoppelten E-Mail-Server in Übereinstimmung mit einer im Voraus konfigurierten Betriebsregel auszuführen.

9. UE nach Anspruch 7, **dadurch gekennzeichnet, dass** es ferner Folgendes umfasst: einen E-Mail-Client (253), der konfiguriert ist, die E-Mail von dem E-Mail-Server in Übereinstimmung mit den geparsten verfeinerten E-Mail-Informationen zu erhalten.

10. UE nach Anspruch 8, **dadurch gekennzeichnet, dass** der E-Mail-Client (253) ferner konfiguriert ist, eine E-Mail-Empfangsbenachrichtigung an die Aufforderungseinheit zu senden, wenn er die E-Mail empfängt; wobei das UE ferner Folgendes umfasst:

eine Aufforderungseinheit (254), die konfiguriert ist, die E-Mail-Empfangsbenachrichtigung zu empfangen und eine Aufforderung zum Empfangen der E-Mail in Übereinstimmung mit der E-Mail-Empfangsbenachrichtigung zu senden.

11. UE nach Anspruch 8, **dadurch gekennzeichnet, dass** der E-Mail-Client (253) ferner konfiguriert ist, seine E-Mail-Empfangs- und -Sendeinformationen in Übereinstimmung mit den geparsten verfeinerten E-Mail-Informationen zu konfigurieren.

**Revendications**

1. Système permettant de mettre en oeuvre une notification de courriel, **caractérisé en ce qu'**il comprend :

un module de génération de notification de courriel, EMN, (231), configuré pour générer des informations affinées de courriel pour un message électronique reçu en fonction d'un format configuré d'informations affinées de courriel, et pour envoyer les informations affinées de courriel, dans lequel le format configuré d'informations affinées de courriel est utilisé pour indiquer le contenu des informations affinées de courriel, et
un équipement utilisateur, UE, (250), comportant un module d'analyse (251), dans lequel le module d'analyse est configuré pour récupérer des informations affinées analysées de courriel en analysant les informations affinées de courriel à partir du module de génération de notification EMN en fonction du format configuré d'informations affinées de courriel,
dans lequel les informations affinées de courriel sont au moins l'une des informations qui suivent :
le nombre total de courriels dans un compte de courriels sur lequel a été recueilli le courriel reçu,
le nombre de courriels non récupérés dans le compte de courriels,
le nombre de courriels récupérés dans le compte de courriels,
le nombre total de courriels instantanés dans le compte de courriels,
le nombre de courriels instantanés non récupérés dans le compte de courriels,
le nombre de courriels instantanés récupérés dans le compte de courriels,
le sujet du courriel reçu,
l'expéditeur du courriel reçu,
la taille du courriel reçu,
des informations sur un fichier joint au courriel reçu,
le numéro d'index du courriel reçu dans le serveur et
la priorité du courriel reçu,
**caractérisé en ce que** l'équipement utilisateur UE comprend en outre :
un module de prise de décision (252) configuré pour déterminer les informations affinées analysées de courriel pour une invite en fonction d'une logique configurée de sélection et de rejet des informations affinées analysées de courriel, et une unité d'invite (254) configurée pour envoyer une invite incluant les informations affinées analysées de courriel pour l'invite.

2. Système selon la revendication 1, **caractérisé en ce que** l'équipement utilisateur UE comprend en outre :

un client de messagerie électronique (253) configuré pour effectuer, avec un serveur couplé de messagerie électronique (230) sous le contrôle du module de prise de décision (252), au moins l'une des opérations suivantes sur un courriel :
la réception d'informations d'en-tête du courriel, la réception du corps du courriel, la réception d'un fichier joint au courriel, le transfert du courriel, la suppression du courriel, la réponse au courriel, et
le module de prise de décision (252) est en outre configuré pour commander le client de messagerie électronique pour effectuer au moins l'une des opérations sur un courriel avec le serveur couplé de messagerie électronique en fonction d'une règle de fonctionnement configurée.

3. Système selon la revendication 1 ou 2, **caractérisé en ce que** le module de génération de notification EMN (231) est en outre configuré pour envoyer un courriel reçu, et le système comprend en outre :

une unité de stockage (232) configurée pour recevoir et sauvegarder le courriel en provenance du module de génération de notification EMN.

**4.** Système selon la revendication 3, **caractérisé en ce que** l'équipement utilisateur UE comprend en outre :

un client de messagerie électronique (253) configuré pour récupérer un courriel à partir de l'unité de stockage (232) en fonction des informations affinées analysées de courriel.

**5.** Système selon la revendication 2, **caractérisé en ce que** le client de messagerie électronique (253) est en outre configuré pour envoyer une notification de réception de courriel à l'unité d'invite lorsqu'il reçoit un courriel, et l'unité d'invite (254) est en outre configurée pour envoyer une invite pour la réception d'un courriel en fonction de la notification de réception de courriel.

**6.** Système selon la revendication 2, 4 ou 5, **caractérisé en ce que** le client de messagerie électronique (253) est en outre configuré pour former ses informations d'envoi et de réception de courriel en fonction des informations affinées analysées de courriel.

**7.** Équipement utilisateur, UE, (250), permettant de mettre en oeuvre une notification de courriel, comprenant :

un module d'analyse (251) configuré pour recevoir des informations affinées de courriel d'un message électronique, dans lequel les informations affinées de courriel sont générées en réponse à un serveur de messagerie électronique qui reçoit le courriel, en fonction d'un format configuré d'informations affinées de courriel, dans lequel le format configuré d'informations affinées de courriel est utilisé pour indiquer le contenu des informations affinées de courriel, et pour récupérer des informations analysées de courriel en analysant les informations affinées de courriel en fonction du format configuré d'informations affinées de courriel,
dans lequel les informations affinées de courriel sont au moins l'une des informations suivantes :
le nombre total de courriels dans un compte de courriels sur lequel a été recueilli le courriel reçu,
le nombre de courriels non récupérés dans le compte de courriels,
le nombre de courriels récupérés dans le compte de courriels,
le nombre total de courriels instantanés dans le compte de courriels,
le nombre de courriels instantanés non récupérés dans le compte de courriels,
le nombre de courriels instantanés récupérés dans le compte de courriels,
le sujet du courriel reçu,
l'expéditeur du courriel reçu,
la taille du courriel reçu,
des informations sur un fichier joint au courriel reçu,
le numéro d'index du courriel reçu dans le serveur et
la priorité du courriel,
l'équipement utilisateur UE comprenant en outre :
un module de prise de décision (252) configuré pour déterminer les informations affinées analysées de courriel pour une invite en fonction de sa logique configurée de sélection et de rejet des informations affinées analysées de courriel, et une unité d'invite (254) configurée pour envoyer une invite incluant les informations affinées analysées de courriel pour l'invite.

**8.** Équipement utilisateur UE selon la revendication 7, **caractérisé en ce qu'**il comprend en outre :

un client de messagerie électronique (253) configuré pour effectuer, avec un serveur couplé de messagerie électronique (230) sous le contrôle du module de prise de décision (252), au moins l'une des opérations suivantes sur un courriel :
la réception d'informations d'en-tête du courriel, la réception du corps du courriel, la réception d'un fichier joint au courriel, le transfert du courriel, la suppression du courriel, la réponse au courriel, et
dans lequel le module de prise de décision est en outre configuré pour commander le client de messagerie électronique pour effectuer au moins l'une des opérations sur un courriel avec le serveur couplé de messagerie électronique en fonction d'une règle de fonctionnement préconfigurée.

**9.** Équipement utilisateur UE selon la revendication 7, **caractérisé en ce qu'**il comprend en outre :

un client de messagerie électronique (253) configuré pour récupérer le courriel à partir du serveur de messagerie électronique en fonction des informations analysées affinées de courriel.

10. Équipement utilisateur UE selon la revendication 8, **caractérisé en ce que** le client de messagerie électronique (253) est en outre configuré pour envoyer une notification de réception de courriel à l'unité d'invite lorsqu'il reçoit le courriel, et l'équipement utilisateur UE comprend en outre :

une unité d'invite (254) configurée pour recevoir la notification de réception de courriel et pour envoyer une invite permettant de recevoir le courriel en fonction de la notification de réception de courriel.

11. Équipement utilisateur UE selon la revendication 8, **caractérisé en ce que** le client de messagerie électronique (253) est en outre configuré pour former ses informations de réception et d'envoi de courriel en fonction des informations analysées affinées de courriel.

PC Client

110

E-mail

130

TRANSMITTION
NETWORK

E-mail

120

Mobile Client

E-mail server

140

EMN

PPG

EMN

POP3request

150

POP3response E-mail· ·

## FIG.1

FIG.2

**EP 2 053 808 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9965256 A